# EUROPÄISCHE PATENTSCHRIFT

(11) **EP 1 138 237 B1**
(45) Veröffentlichungstag und Bekanntmachung des Hinweises auf die Patenterteilung: **02.11.2005**
(21) Anmeldenummer: 01101459.4
(22) Anmeldetag: 23.01.2001
(51) Int. Cl.: A47J 43/044, A47J 43/08

(54) **Küchenmaschine**
Kitchen appliance
Appareil de cuisine

(30) Priorität: 31.03.2000 DE 10016291
(43) Veröffentlichungstag der Anmeldung: 04.10.2001
(73) Patentinhaber: BSH Bosch und Siemens Hausgeräte GmbH, 81739 München (DE)
(72) Erfinder: Pavlovic, Henrik, Ing., 3333 Ljubno, Savinji (SI); Obermaier, Markus, Dipl.-Ing. (FH), 83365 Nussdorf (DE); Feil, Rolf, 89312 Günzburg (DE); Mazej, Stanislav, 3303 Gomilsko (SI)

(56) Entgegenhaltungen:
- DE-A- 3 045 088
- DE-A- 3 116 111
- DE-C- 475 949
- DE-C- 970 526
- FR-A- 1 335 639
- US-A- 1 783 651
- US-A- 4 023 780

## Beschreibung

Die Erfindung betrifft eine Küchenmaschine mit einem L-förmigen Grundgehäuse, auf dessen waagerechten Sockelteil ein Bearbeitungsbehältnis aufsetzbar ist und an dessen senkrecht verlaufendem Gehäuseteil ein über das Bearbeitungsbehältnis ragender Auslegerarm angeordnet ist, an welchem Auslegerarm mindestens eine Ankoppelstelle für ein durch den Antriebsmotor der Küchenmaschine antreibbares Werkzeug vorgesehen ist.

Eine auf dem Markt befindliche Küchenmaschine weist an dem senkrecht verlaufenden Gehäuseteil ihres L-förmigen Grundgehäuses einen abnehmbaren Auslegerarm auf, der über eine an dem waagerechten Sockelteil des Grundgehäuses aufsetzbare Rührschüssel ragt. Der Auslegerarm ist mit einer Ankoppelstelle für ein Bearbeitungswerkzeug, wie Knethaken oder Rührbesen, versehen. Der Antriebsmotor der Küchenmaschine ist in dem senkrecht verlaufenden Gehäuseteil angeordnet. Die Antriebsverbindung der am Auslegerarm vorgesehenen Ankoppelstelle mit dem Antriebsmotor wird über ein an der Oberseite des senkrecht verlaufenden Gehäuseteiles angeordnetes Kupplungsstück, welches beim Aufsetzen des Auslegerarmes in ein entsprechendes am Auslegerarm vorgesehenes Gegenkupplungsstück eingreift, hergestellt. Im Auslegerarm selbst erfolgt eine 90° Umlenkung in der Antriebsverbindung.

Die FR 1 335 639 offenbart eine Küchenmaschine gemäß dem Oberbegriff des Patentanspruchs 1.

Der Erfindung liegt die Aufgabe zugrunde, eine Küchenmaschine der eingangs beschriebenen Art so auszubilden, dass der Antrieb des in dem auf den waagerechten Sockelteil aufzusetzenden Bearbeitungsbehältnis wirkenden Bearbeitungswerkzeuges wesentlich vereinfacht ist.

Die Lösung der gestellten Aufgabe gelingt nach der Erfindung durch die Merkmale des Kennzeichnenden Teils.

Vorteilhaft ist es, dass an dem Auslegerarm mindestens eine weitere Ankoppelstelle vorgesehen ist, wobei die Ankoppelstellen unterschiedliche Abtriebsdrehzahlen aufweisen. Dadurch stehen für unterschiedliche Bearbeitungswerkzeuge die jeweils geeigneten Antriebsdrehzahlen zur Verfügung.

Wegen der Anordnung des Antriebsmotors in dem Auslegerarm muss der Auslegerarm wegen des elektrischen Anschlusses des Antriebsmotors nicht abnehmbar an dem senkrecht verlaufenden Gehäuseteil angeordnet sein. Dadurch kann der Auslegerarm den Zugang zu dem auf dem Sockelteil aufgesetzten Bearbeitungsbehältnis behindern. Hier wird dadurch Abhilfe geschaffen, dass der Auslegerarm höhenverstellbar an dem senkrecht verlaufenden Gehäuseteil angeordnet ist. Der Auslegerarm kann somit gegenüber dem Bearbeitungsbehältnis angehoben werden, so dass dieses leichter von dem Sockelteil abgenommen werden kann. Außerdem ist ein besserer Zugriff zum Innenraum des Bearbeitungsbehältnisses möglich.

Die Höhenverstellung des Auslegerarmes kann vorteilhafterweise mittels einer in beiden Drehrichtungen durch einen Verstellmotor antreibbaren und in dem senkrecht verlaufenden Gehäuseteil angeordneten Spindel erfolgen. Der Auslegerarm kann mittels eines solchen Antriebes sowohl angehoben als auch abgesenkt werden, so dass seitens eines Benutzers der Küchenmaschine kein Kraftaufwand für das Verstellen des Auslegerarmes erforderlich ist.

Dadurch, dass der Auslegerarm mittels eines Federantriebes in seiner Höhenlage verstellbar und in der jeweiligen Höhenlage arretierbar ist. Bleibt dem Benutzer der Küchenmaschine der für das Anheben des Auslegerarmes notwendige höhere Kraftaufwand erspart. Lediglich das wesentlich leichtere Absenken des Auslegerarmes muss vom Benutzer durchgeführt werden.

Für die Höhenverstellung ergibt sich dadurch eine gute Führung für den Auslegerarm, dass der Auslegerarm mittels einer Kugelumlaufbuchse axial verstellbar auf einer im senkrecht verlaufenden Gehäuseteil angeordneten Tragsäule gelagert ist.

Weitere für den Benutzer wenig Kraftaufwand erfordernde Verstellmöglichkeiten ergeben sich dadurch, dass der Auslegerarm mittels einer Gasdruckfeder höhenverstellbar ist oder auch dadurch, dass der Auslegerarm mittels eines Hydraulikantriebes höhenverstellbar ist.

Eine technisch wenig aufwendiger Verstellmechanismus besteht darin, dass der Auslegerarm mittels eines von Hand betätigbaren Zahnrad-Zahnstangengetriebes höhenverstellbar ist. Bei einer solchen Ausgestaltung der Verstellmöglichkeit lässt sich eine Krafteinsparung für den Benutzer dadurch erreichen, dass ein auf das Zahnrad in der Anheberichtung wirkender Federmotor vorgesehen ist.

Eine weitere Ausgestaltung der Höhenverstellbarkeit des Auslegerarmes ist dadurch gekennzeichnet, dass der Auslegerarm mittels eines durch Feder- und/oder Gewichtskraft beaufschlagten Hebelgestänges höhenverstellbar ist.

Anhand eines in der Zeichnung schematisch dargestellten Ausführungsbeispieles wird die Erfindung nachfolgend noch näher erläutert.

Es zeigen:
- Fig. 1: eine Küchenmaschine mit einem durch einen Spindelantrieb verstellbaren Auslegerarm,
- Fig. 2: eine Küchenmaschine mit einem mittels Kugelumlaufbuchse verstellbar auf einer Tragsäule gelagertem Auslegerarm,
- Fig. 3: eine Küchenmaschine mit einem mittels eines Zahnrad-Zahnstangengetriebes verstellbaren Auslegerarm und
- Fig. 4: eine Küchenmaschine mit einem mittels eines durch Federkraft beaufschlagten Hebelgestänges verstellbaren Auslegerarm.

Mit 1 ist das L-förmige Grundgehäuse einer Küchenmaschine bezeichnet. Auf dem waagerechten Sockelteil 2 dieses Grundgehäuses ist eine Rührschüssel 3 aufgesetzt. An dem senkrecht verlaufenden Gehäuseteil 4 des Grundgehäuses 1 ist ein Auslegerarm 5 höhenverstellbar angeordnet. Der Antriebsmotor 6 der Küchenmaschine ist in diesen Auslegerarm 5 eingebaut. Eine Ankoppelstelle 7 für ein in die Rührschüssel 3 eingreifendes Bearbeitungswerkzeug steht mit dem Antriebsmotor 6 in Antriebsverbindung. Zweckmäßigerweise ist zwischen der Ankoppelstelle 7 und dem Antriebsmotor 6 ein Getriebe angeordnet.

In dem senkrecht verlaufenden Gehäuseteil 4 ist eine durch einen Verstellmotor 8 in beiden Drehrichtungen antreibbare Spindel 9 vorgesehen, mit der der Auslegerarm 5 über eine Spindelmutter 10 in Antriebsverbindung steht. Durch den Spindelantrieb ist der Auslegerarm 5 in der jeweils eingenommenen Stellung arretiert. Der Verstellmotor 8 kann mittels eines am Gehäuseteil 4 angeordneten Schaltelementes in der einen oder anderen Drehrichtung angesteuert und dadurch der Auslegerarm 5 angehoben bzw. abgesenkt werden. Ein Anheben des Auslegerarmes 5 erfolgt, um das Abnehmen oder Aufsetzen der Rührschüssel 3 auf den Sockelteil 2 oder einen Zugriff in den Innenraum der Rührschüssel 3 zu erleichtern. Für die Durchführung eines Bearbeitungsvorganges wird der Auslegerarm 5 in seine an die Rührschüssel 3 angenäherte Arbeitsstellung abgesenkt.

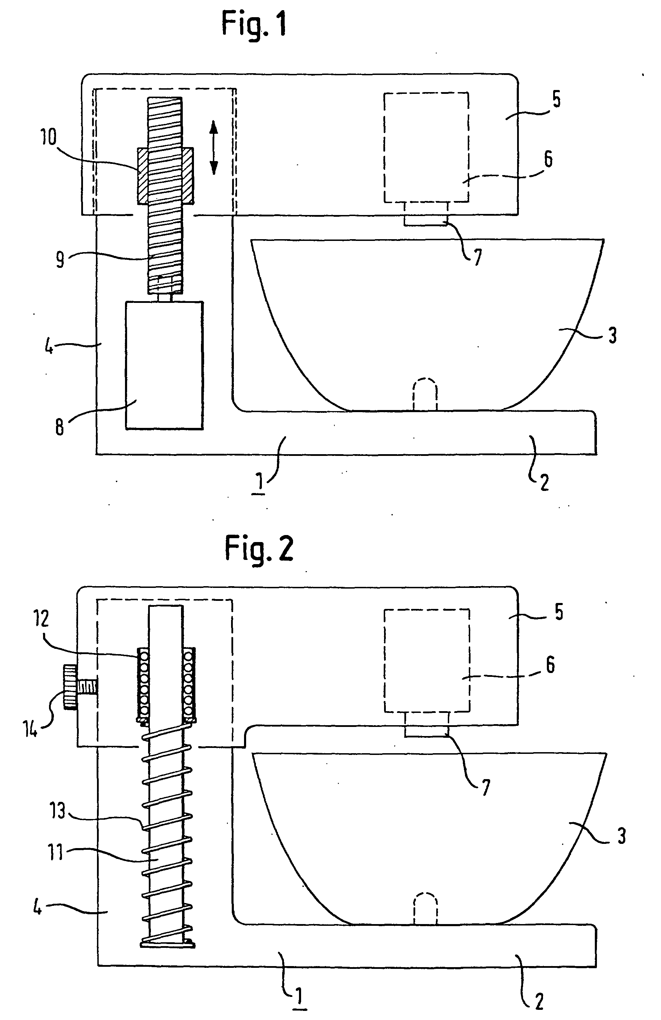

In Fig. 2 ist mit 11 eine glatte Tragsäule bezeichnet, die in dem senkrecht verlaufenden Gehäuseteil 4 fest eingebaut ist. Mittels einer Kugelumlaufbuchse 12 ist der Auslegerarm 5 verstellbar auf der Tragsäule 11 gelagert. Eine als Schraubenfeder 13 ausgebildete Druckfeder übt auf die Kugelumlaufbuchse 12 eine in Anheberichtung des Auslegerarmes 5 gerichtete Kraft aus. Mittels einer Feststellschraube 14 kann der Auslegerarm 5 in seiner jeweiligen Stellung am senkrecht verlaufenden Gehäuseteil 4 arretiert werden. Zum Anheben des Auslegerarmes 5 wird die Feststellschraube 14 gelöst, so dass die Schraubenfeder 13 den Auslegerarm 5 nach oben drücken kann. Soll der Auslegerarm 5 wieder abgesenkt werden, muß er vom Benutzer der Küchenmaschine gegen die Kraft der Schraubenfeder 13 nach unten gedrückt und in seiner Betriebsstellung mittels der Feststellschraube 14 gehalten werden.

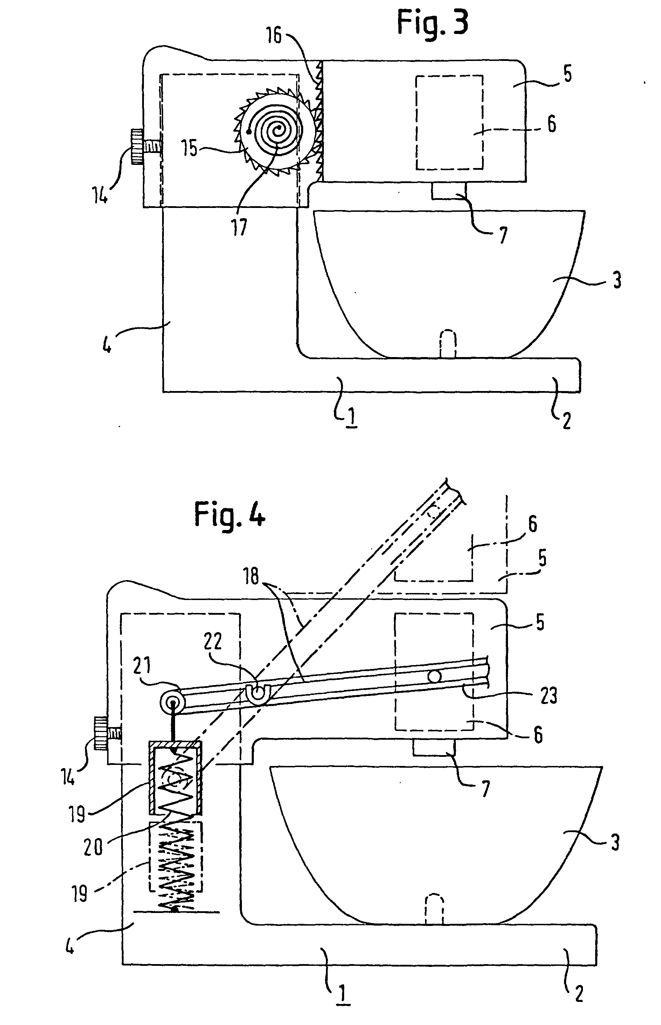

Bei dem in Fig. 3 gezeigten Ausführungsbeispiel einer Küchenmaschine ist ein von Hand, gegebenenfalls auch durch einen entsprechenden Motor betätigbares Zahnrad-Zahnstangengetriebe vorgesehen. Durch Drehen des Zahnrades 15 wird der Auslegerarm 5 durch die Zahnstange 16 nach oben oder unten bewegt. Dabei kann ein auf das Zahnrad 15 in Anheberichtung wirkender Federmotor 17 vorgesehen sein, so dass für das Anheben des Auslegerarmes 5 weniger Kraft erforderlich ist. Ist das Zahnrad-Zahnstangengetriebe 15;16 nicht selbsthemmend ausgebildet, erfolgt eine Arretierung des Auslegerarmes 5 in seiner jeweiligen Stellung wiederum durch die Feststellschraube 14.

Eine wenig Kraftaufwand erfordernde Höhenverstellung des Auslegerarmes 5 ist auch mittels eines ein Hebelgestänge bildenden doppelarmigen Hebels 18 möglich, welcher mit einem Gewicht 19 und einer Zugfeder 20 gekoppelt ist. Das Gewicht 19 und die Zugfeder 20 greifen an dem einen Ende 21 des doppelarmigen Hebels 18 an, der um eine Achse 22 verschwenkbar am Gehäuse 1 der Küchenmaschine gelagert ist. Mit seinem anderen Ende 23 ist der Hebel 18 an den Auslegerarm 5 angelenkt. Das Gewicht 19 ist hohltonnenförmig ausgebildet und glockenförmig an dem Hebel 18 angehängt. Die Zugfeder 20 ist an der Innenseite des Bodenteiles des Gewichtes 19 befestigt. Damit wird für die Zugfeder 20 kein zusätzlicher Raum benötigt. Im zusammengezogenen Zustand kann die Zugfeder 20 gegebenenfalls vollständig im Hohlraum des Gewichtes 19 aufgenommen werden.

Es kann zur Verbesserung der Arbeitsergebnisse der Küchenmaschine auch eine Beheizung der Rührschüssel 3 erfolgen. Dabei ist eine direkte Beheizung durch in der Rührschüssel 3 eingebaute Heizelemente möglich. Beim Aufsetzen der Rührschüssel 3 auf den Sockelteil 2 können die Heizelemente durch entsprechende Kontaktierung an den Stromkreis der Küchenmaschine angeschlossen werden. Es ist aber auch eine indirekte Beheizung über eine in dem Sockelteil 2 eingebaute Heizplatte möglich.

## Patentansprüche

1. Küchenmaschine mit einem L-förmigen Grundgehäuse, auf dessen waagerechten Sockelteil (2) ein Bearbeitungsbehältnis (3) aufsetzbar ist und an dessen senkrecht verlaufenden Gehäuseteil (4) ein über das Bearbeitungsbehältnis (3) ragender Auslegerarm (5) angeordnet ist, an welchem Auslegerarm(5) mindestens eine Ankoppelstelle (7) für ein durch den Antriebsmotor (6) der Küchenmaschine antreibbares Werkzeug vorgesehen ist, wobei der Antriebsmotor (6) in dem Auslegerarm (5) eingebaut ist, **dadurch gekennzeichnet, dass** der Antriebsmotor (6) in dem über das Bearbeitungsbehältnis (3) ragenden Teil des Auslegerarms (5) eingebaut ist.

2. Küchenmaschine nach Anspruch 1, **dadurch gekennzeichnet, dass** die Ankoppelstelle (7) für das Werkzeug direkt mit der Abtriebswelle des Antriebsmotors (6) gekoppelt ist.

3. Küchenmaschine nach Anspruch 1, **dadurch gekennzeichnet, dass** an dem Auslegerarm (5) mindestens eine weitere Ankoppelstelle (7) vorgesehen ist, wobei die Ankoppelstellen unterschiedliche Abtriebsdrehzahlen aufweisen.

4. Küchenmaschine nach einem der Ansprüche 1 bis 3, **dadurch gekennzeichnet, dass** der Auslegerarm (5) zumindest weitestgehend geführt höhenverstellbar an dem senkrecht verlaufenden Gehäuseteil (4) angeordnet ist.

5. Küchenmaschine nach Anspruch 4, **dadurch gekennzeichnet, dass** der Auslegerarm (5) mittels einer in beiden Drehrichtungen durch einen Verstellmotor (8) antreibbaren und in dem senkrecht verlaufenden Gehäuseteil (4) angeordneten Spindel (9) höhenverstellbar ist.

6. Küchenmaschine nach Anspruch 4, **dadurch gekennzeichnet, dass** der Auslegerarm (5) mittels eines Federantriebes (13) in seiner Höhenlage verstellbar und in der jeweiligen Höhenlage arretierbar ist.

7. Küchenmaschine nach Anspruch 6, **dadurch gekennzeichnet, dass** der Auslegerarm (5) mittels einer Kugelumlaufbuchse (12) axial verstellbar auf einer im senkrecht verlaufenden Gehäuseteil (4) angeordneten Tragsäule (11) gelagert ist.

8. Küchenmaschine nach Anspruch 6, **dadurch gekennzeichnet, dass** der Auslegerarm (5) mittels einer Gasdruckfeder höhenverstellbar ist.

9. Küchenmaschine nach Anspruch 4, **dadurch gekennzeichnet, dass** der Auslegerarm (5) mittels eines Hydraulikantriebes höhenverstellbar ist.

10. Küchenmaschine nach Anspruch 4, **dadurch gekennzeichnet, dass** der Auslegerarm (5) mittels eines von Hand betätigbaren Zahnrad-Zahnstangengetriebes (15;16) höhenverstellbar ist.

11. Küchenmaschine nach Anspruch 10, **dadurch gekennzeichnet, dass** ein auf das Zahnrad (15) in der Anheberichtung wirkender Federmotor (17) vorgesehen ist.

12. Küchenmaschine nach Anspruch 4, **dadurch gekennzeichnet, dass** der Auslegerarm mittels eines durch Feder- und/oder Gewichtskraft (20;19) beaufschlagten Hebelgestänges (18) höhenverstellbar ist.

## Claims

1. Food processor with an L-shaped basic housing, on the horizontal base part (2) of which a processing container (3) can be placed and at the vertically extending housing part (4) of which is arranged a cantilever arm (5) projecting over the processing container (3), at which cantilever arm (5) at least one coupling point (7) for a tool drivable by the drive motor (6) of the food processor is provided, wherein the drive motor (6) is incorporated in the cantilever arm (5), **characterised in that** the drive motor (6) is incorporated in the part of the cantilever arm (5) projecting over the processing container (3).

2. Food processor according to claim 1, **characterised in that** the coupling point (7) for the tool is coupled directly with the driven shaft of the drive motor (6).

3. Food processor according to claim 1, **characterised in that** at least one further coupling point (7) is provided at the cantilever arm (5), wherein the coupling points have different drive take-off rotational speeds.

4. Food processor according to one of claims 1 to 3, **characterised in that** the cantilever arm (5) is arranged at the vertically extending housing part (4) to be at least substantially guided to be displaceable in height.

5. Food processor according to claim 4, **characterised in that** the cantilever arm (5) is adjustable in height by means of a spindle (9) which is drivable in both directions of rotation by an adjusting motor (8) and which is arranged in the vertically extending housing part (4).

6. Food processor according to claim 4, **characterised in that** the cantilever arm (5) is adjustable in its height position by means of a spring drive (13) and is lockable in the respective height position.

7. Food processor according to claim 6, **characterised in that** the cantilever arm (5) is mounted by means of a recirculating ball bush (12) to be axially adjustable on a support column (11) arranged in the vertically extending housing part (4).

8. Food processor according to claim 6, **characterised in that** the cantilever arm (5) is adjustable in height by means of a gas pressure spring.

9. Food processor according to claim 4, **characterised in that** the cantilever arm (5) is adjustable in height by means of a hydraulic drive.

10. Food processor according to claim 4, **characterised in that** the cantilever arm (5) is adjustable in height by means of a manually actuable rack-and-pinion gear (15; 16).

11. Food processor according to claim 10, **characterised in that** a spring motor (17) acting on the gearwheel (15) in rising direction is provided.

12. Food processor according to claim 4, **characterised in that** the cantilever arm is adjustable in height by means of a lever linkage (18) acted on by spring force (20) and/or gravitational force (19).

## Revendications

1. Machine domestique avec un boîtier de base en forme de L, sur la partie horizontale formant socle (2) de celle-ci peut être posé un récipient de traitement (3) et sur sa partie formant boîtier (4) passant verticalement est disposé une console (5) dépassant au-dessus du récipient de traitement (3), sur cette console (5) est prévu au moins un endroit de couplage (7) pour un outil pouvant être actionné par le moteur d'entraînement (6) de la machine domestique, le moteur d'entraînement (6) étant encastré dans la console (5), **caractérisée en ce que** le moteur d'entraînement (6) est monté dans la partie de la console (5) dépassant au-dessus du récipient de traitement (3).

2. Machine domestique selon la revendication 1, **caractérisée en ce que** l'endroit de couplage (7) pour l'outil est couplé directement à l'arbre de sortie du moteur d'entraînement (6).

3. Machine domestique selon la revendication 1, **caractérisée en ce que** sur le bras de couplage (5) est prévu au moins un autre endroit de couplage (7), les endroits de couplage présentant différentes vitesses de sortie.

4. Machine domestique selon l'une des revendications 1 à 3, **caractérisée en ce que** la console (5) est guidée au moins de façon très étendue en pouvant être déplacé en hauteur sur la partie formant boîtier (4) passant verticalement.

5. Machine domestique selon la revendication 4, **caractérisée en ce que** la console (5) peut être déplacée en hauteur à l'aide d'une broche (9) pouvant être actionnée dans les deux sens de rotation par un moteur réglable (8) et disposée dans la partie formant boîtier (4) passant verticalement.

6. Machine domestique selon la revendication 4, **caractérisée en ce que** la console (5) est déplaçable à l'aide d'un entraînement à ressort (13) dans sa hauteur et peut être arrêté dans la hauteur respective.

7. Machine domestique selon la revendication 6, **caractérisée en ce que** la console (5) est logée en étant déplaçable axialement à l'aide d'une boîte à recirculation de billes (12) sur une colonne porteuse (11) disposée dans une partie de boîtier (4) passant verticalement.

8. Machine domestique selon la revendication 6, **caractérisée en ce que** la console (5) est déplaçable en hauteur à l'aide d'un ressort de pression à gaz.

9. Machine domestique selon la revendication 4, **caractérisée en ce que** la console (5) est déplaçable en hauteur à l'aide d'un entraînement hydraulique.

10. Machine domestique selon la revendication 4, **caractérisée en ce que** la console (5) est déplaçable en hauteur à l'aide d'un entraînement à roue dentée-crémaillère (15 ; 16) pouvant être actionné à la main.

11. Machine domestique selon la revendication 10, **caractérisée en ce qu'**un moteur à ressort (17) agissant sur la roue dentée (15) est prévu dans le sens de soulèvement.

12. Machine domestique selon la revendication 4, **caractérisée en ce que** la console est déplaçable en hauteur à l'aide d'un système de tiges de levier (18) appliqué par une force de ressort et/ou pondérale.
